Europäisches Patentamt

European Patent Office

Office européen des brevets

(11) Veröffentlichungsnummer: **0 308 718**
**A2**

(12) **EUROPÄISCHE PATENTANMELDUNG**

(21) Anmeldenummer: **88114524.7**

(22) Anmeldetag: **06.09.88**

(51) Int. Cl.⁴: **G01N 29/04 , G01N 27/84**

(30) Priorität: **21.09.87 DE 3731709**

(43) Veröffentlichungstag der Anmeldung:
**29.03.89 Patentblatt 89/13**

(84) Benannte Vertragsstaaten:
**AT BE CH ES FR GB IT LI NL SE**

(71) Anmelder: **Magfoil & Inspektionstechniken GmbH**
**Grootkoppel 29**
**D-2400 Lübeck(DE)**

(72) Erfinder: **Walther, Karl G.**
**Theodor-Heuss-Strasse 35**
**D-5840 Schwerte(DE)**
Erfinder: **Walther, Ronald G.**
**Rütscher-Strasse 175**
**D-5100 Aachen(DE)**

(74) Vertreter: **von Hellfeld, Axel, Dipl.-Phys. Dr. et al**
**Patentanwälte Wuesthoff- v. Pechmann-Behrens-Goetz Schweigerstrasse 2**
**D-8000 München 90(DE)**

(54) **Vorrichtung zum Kennzeichnen einzelner Stellen eines Unterwasserbauwerkes.**

(57) Zum Kennzeichnen und Auffinden von zu über-prüfenden Schweißnähten 52 unter Wasser sind Ul-traschallsender 54 vorgesehen, die mit leuchtenden oder Licht reflektiernden Zeichen 58 versehen sind. Der Taucher führt einen Ultraschallempfänger 60 zum Ultraschallsender 54. Zur genaueren Ortsbe-stimmung entlang der Schweißnaht 52 ist ein Band vorgesehen, das entlang der Schweißnaht 52 ange-ordnet wird und codiert angeordnete Elemente auf-weist.

FIG.3

EP 0 308 718 A2

## Vorrichtung zum Kennzeichnen einzelner Stellen eines Unterwasserbauwerkes

Die Erfindung betrifft eine Vorrictung zum Kennzeichnen und Auffinden von einzelnen Stellen eines Unterwasserbauwerkes, wie zu überprüfenden Schweißnähten einer Unterwasser-Pipeline oder dergleichen.

Es besteht ein wachsender Bedarf, die Schweißnähte von geschweißten Unterwasserbauwerken, wie Pipelines oder dergleichen, auf Risse und andere Fehlstellen zu untersuchen.

Aus der DE-PS 31 45 090 ist eine Vorrichtung zum Prüfen von Schweißnähten bekannt, mit einem Behälter, der eine Trägerfolie und eine Sichtfolie aufweist, zwischen denen Teilchen aus magnetisierbarem Material in einer Flüssigkeit suspendierbar sind und sich in einem das zu prüfende Werkstück und die Suspension durchsetzenden Magnetfeld bei Fehlstellen in charakteristische Weise anordnen.

In den deutschen Patentanmeldung P 37 22 569.3 und P 37 22 596.0 werden Weiterbildungen der bekannten Vorrichtung vorgeschlagen.

Bei Arbeiten unter Wasser besteht unter anderem die Schwierigkeit, daß der Taucher in der Dunkleiheit der Tiefsee nur eine sehr schlechte Sicht hat. Bei der Untersuchung von größeren Unterwasserbauwerken kann es deshalb zu Verwechslungen und Irrtümern kommen, zum Beispiel können zu überprüfende Schweißnähte verwechselt, falsch bezeichnet oder nicht eindeutig identifizierbar beschrieben werden.

Überdies besteht beim Einsatz der in der DE-PS 31 45 090 und den deutschen Patentanmeldung P 37 22 569.3 und P 37 22 596.0 beschriebenen Vorrichtungen noch das Problem, daß bei Untersuchungen längerer Schweißnähte mehrere Behälter nebeneinander entlang der Schweißnaht positioniert werden müssen, in denen dann bei Durchführung der Untersuchung sich die magnetisierbaren Teilchen in der für eventuelle Fehlstellen charakteristischen Weise anordnen und sodann fixiert werden. Die Behälter werden dann vom Taucher nach Durchführung der Untersuchungen von der Schweißnaht abgenommen und an die Oberfläche gefördert. Für die Auswertung der Behälter und die eindeutige Lokalisierung der Fehlstellen ist es dann aber erforderlich zu wissen, an welcher Stelle der Schweißnaht die einzelnen Behälter bei Durchführung der Untersuchung gelegen waren.

Der Erfindung liegt die Aufgabe zugrunde, eine einfach handhabbare und zuverlässige Vorrichtung zum Kennzeichnen und Auffinden einzelner Stellen eines Unterwasserbauwerkes zu schaffen. Darüberhinaus stellt sich die Erfindung auch die Aufgabe, eine einfach handhabbare und zuverlässige Vorrichtung bereitzustellen, mit der eine Vielzahl von entlang einer Schweißnaht angeordneten Behältern, die fixierbare magnetische Teilchen enthalten, hinsichtlich ihrer Lage in Bezug auf eine zu überprüfende Schweißnaht bestimmt und gekennzeichnet werden können.

Die erfindungsgemäße Vorrichtung zum Kennzeichnen und Auffinden einzelner Stellen eines Unterwasserbauwerkes, wie zu überprüfenden Schweißnähten, ist gekennzeichnet durch mehrere, an den zu kennzeichnenden und aufzufindenden Stellen des Unterwasserbauwerks befestigbare Ultraschallsender, die jeweils mit einem leuchtenden oder Licht reflektiernden Zeichen versehen sind, und zumindest einen Ultraschallempfänger der nahe den Ultraschallsendern positionierbar und mit einer Leitung verbunden ist, über die ein vom jeweiligen Ultraschallsender ausgesandtes Signal übertragbar ist.

Gemäß der Erfindung können also zunächst in einem ersten Arbeitsgang sämtliche zu untersuchenden Stellen eines Unterwasserbauwerkes jeweils mit einem Ultraschallsender markiert werden, der direkt an am Unterwasserbauwerk befestigbar ist. Später kann ein Taucher sich dann ohne Mühe an diesen Ultraschallsendern orientieren, da sie mit leuchtenden oder Licht reflektierenden Zeichen, wie Zahlen oder Buchstaben, versehen sind. Gleichzeitig ist es möglich, die Stelle, an welcher der Taucher gerade arbeitet, dadurch den an Deck des Betreuungsschiffes tätigen Personen bekanntzugeben, daß der Taucher einen Ultraschallempfänger direkt an dem am Unterwasserbauwerk befestigten Ultraschallsender positioniert, so daß der Empfänger vom Ultrashallsender empfangene Signale über eine Leitung an Deck leitet. Für die eindeutige Zuordnung und Kennzeichnung der einzelnen Stellen des Unterwasserbauwerkes können die Ultraschallsender entweder jeweils unterschiedliche Frequenzen aussenden oder das von Ihnen abgegebene Signal ist jeweils in charakteristischer Weise codiert.

Der Ultraschallsender ist vorzugsweise so ausgestaltet, daß er einen Permanentmagneten aufweist, so daß er ohne weiteres an einem ferromagnetischen Werkstoff magnetisch befestigbar ist.

Ist in der vorstehend beschriebenen Weise eine Schweißnaht mittels eines Ultraschallsenders markiert worden, so kann in einem nachfolgenden Arbeitsgang ein Taucher diese Schweißnaht leicht auffinden und identifizieren. Soll nun diese Schweißnaht auf Risse oder andere Fehlstellen mittels einer Vielzahl von Behältern der eingangs genannten Art untersucht werden, so wird der Ort der einzelnen Behälter über der Schweißnaht gemäß einer weiteren Ausgestaltung der Erfindung dadurch bestimmt, daß ein langgestrecktes Band entlang der Schweißnaht befestigt wird, beispielsweise ausgehend von dem an oberster Stelle der Schweißnaht angeordneten Ultraschallsender. Das Band ist in Richtung seiner Längserstreckung mit codiert angeordneten Elementen aus einem Material großer magnetischer Permeabilität versehen. Die Elemente sind in Bezug auf ihren Ort codiert, d. h. sie sind in einer für den jeweiligen Ort entlang des Bandes charakteristischen Weise gestaltet oder angeordnet, wofür es offensichtlich eine Vielzahl von Möglichkeiten gibt.

Werden nun die bekannten Behälter mit den magnetischen Teilchen auf die Schweißnaht aufgelegt und wird die bekannte Untersuchung durchgeführt, so bewirken nicht nur die Fehlstellen in der Schweißnaht eine charakteristische Ausrichtung der magnetischen Teilchen in den Behältern, sondern auch die codiert angeordneten Elemente aus hochpermeablem Material mit minimaler Remanenz erzeugen eine den Ort des Behälters in Bezug auf das Band und somit in Bezug auf die Schweißnaht charakteristische Ausrichtung der magnetisierbaren Teilchen, wobei auch diese charakteristische Ausrichtung anschließend in an sich bekannter Weise fixiert wird. Die anschließend von der Schweißnaht abgenommenen und an Deck geförderten Behälter weisen somit nicht nur eine den Fehlstellen der Schweißnaht entsprechende charakteristische Ausrichtung der magnetischen Teilchen auf, sondern darüber hinaus auch eine für ihren Ort in Bezug auf die Schweißnaht charakteristische Struktur der magnetischen Teilchen.

In einer bevorzugten Ausgestaltung einer solchen Vorrichtung ist vorgesehen, daß das Band mit leuchtenden oder Licht reflektierenden Markierungen versehen ist, so daß der Taucher, nachdem das Band parallel zur Schweißnaht befestigt worden ist, sich leicht anhand der leuchtenden bzw. Licht reflektierenden Markierungen orientieren kann. Haben gemäß einer bevorzugten Ausgestaltung der Erfindung die Markierungen einen Abstand voneinander, der jeweils der Länge eines Behälters entspricht, so kann der Taucher in einfacher Weise neben jede Markierung einen Behälter positionieren, beispielsweise bringt er die Mittellinie (oder eine andere Markierung) des Behälters direkt in Anlage an die leuchtende oder Licht reflektierende Markierung des Bandes.

Bevorzugt werden die codiert angeordneten Elemente des Bandes durch kurze Drahtstücke aus hichpermeablem Material geringer Remanenz geformt. Die Drahtstücke können in das Band in regelmässigen Abständen eingeschmolzen sein. Es versteht sich, daß das Band selbst aus einem Material besteht, die magnetisch unwirksam ist, beispielsweise aus Kunststoff.

Die Befestigung des Bandes entlang der Schweißnaht erfolgt bei einer bevorzugten Ausgestaltung der Erfindung dadurch, daß im Band eine Vielzahl von Taschen vorgesehen sind, in welche Permanentmagnete einschiebbar sind, die das Band an der zu untersuchenden Schweißnaht halten.

Nachfolgend wird ein Ausführungsbeispiel der Erfindung anhand der Zeichnung näher erläutert. Es zeigt:

Fig. 1 eine schematische Darstellung einer Vorrichtung zum Prüfen von metallischen Werkstücken;

Fig. 2 einen Schnitt entlang der Linie I-II der Fig. 1;

Fig. 3 eine Vorrichtung zum Kennzeichnen und Auffinden einzelner Stellen eines Unterwasserbauwerkes;

Fig. 4 einen Schnitt durch einen Ultraschall-Empfänger;

Fig. 5 ein Unterwasserbauwerk mit einem entlang einer Schweißnaht angebrachten Band; und

Fig. 6 das in Fig. 5 gezeigte Band im einzelnen.

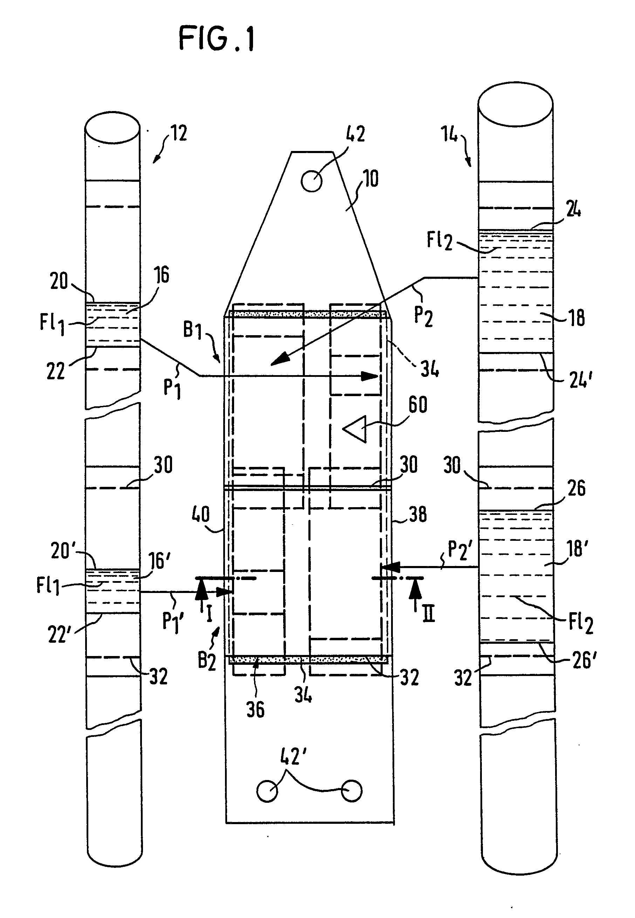

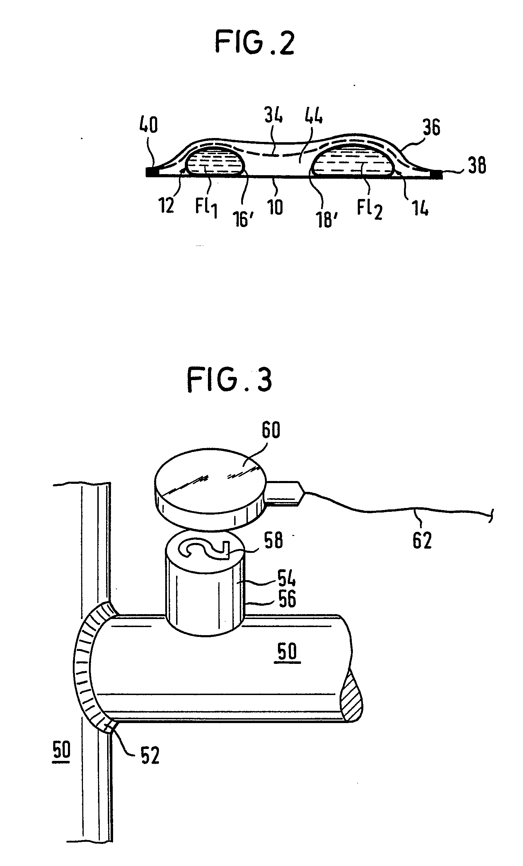

Die Fig. 1 und 2 zeigen eine Einrichtung zum Prüfen von Werkstücken, insbesondere Schweißnähten, auf Risse und degleichen, die bei der erfindungsgemäßen Vorrichtung zum Kennzeichnen und Auffinden einzelner Stellen eines Unterwasserbauwerkes Verwendung finden und erfindungsgemäß hinsichtlich Ihrer Lage in Bezug auf z. B. eine Schweißnaht bestimmt und gekennzeichnet werden. Diese Figuren entsprechen der deutschen Patentanmeldung P 37 22 596.0.

Fig. 1 zeigt eine Trägerfolie 10 aus Kunststoff sowie zwei Schläuche 12 und 14, ebenfalls aus Kunststoff. In den in Fig. 1 links bzw. rechts von der Trägerfolie 10 gezeichneten Schläuchen 12 bzw. 14 sind Flüssigkeitskammern 16, 16', 18, 18' ausgeformt. Durch geschweißte oder geklebte Nähte 20, 20', 22, 22', 24, 24', 26 und 26' sind in den beiden Schläuchen 12 bzw. 14 die einzelnen Kammern abgetrennt.

In den Kammern 16, 16' ist jeweils eine Flüssigkeit $Fl_1$ enthalten. Beim dargestellten Ausführungsbeispiel ist die Flüssigkeit $Fl_1$ entionisiertes Wasser. In den Kammern 18, 18' ist eine alkalische Lösung $Fl_2$ von Nesosilikaten enthalten.

Bei der Herstellung der gebrauchsfertigen Vorrichtung zum Prüfen von metallischen Werkstücken werden die in den Schläuchen 12 bzw. 14 ausgebildeten Kammern 16, 16', 18, 18' gemäß den Pfeilen $P_1$, $P_1'$, $P_2$ bzw. $P_2'$ auf der Trägerfolie 10 positioniert.

Gemäß den Fig. 1 und 2 wird über die auf der Trägerfolie 10 angeordneten Kammern 16, 16', 18, 18' ein durchgehendes Netz aus Kunststoff gelegt und über das Netz eine durchsichtige Sichtfolie 36, ebenfalls aus Kunststoff. Sodann werden gemäß den Fig. 1 und 2 die Trägerfolie 10, das Netz 34 und die Schichtfolie 36 entlang den Schweißnähten 38 und 40 miteinander verbunden. Die Kammern 16, 16', 18, 18' sind ebenfalls durch Schweißung oder Klebung an überstehenden Schlauchabschnitten mit der Trägerfolie 10 verbunden. Mit 42, 42' sind Löcher bezeichnet.

Weiterhin werden zwischen der Sichtfolie 36 und dem Netz 34 benachbart den das entionisierte Wasser enthaltenden Kammern 16, 16' jeweils gepreßte und evakuierte Tabletten aus einem Carbonyleisen, Zinkoxid und weißen Zement enthaltenden Pulver angeordnet (nicht gezeigt).

Gemäß Fig. 1 werden auf der Trägerfolie 10 durch die Schweißnaht 30 getrennt zwei Behälter $B_1$, $B_2$ gebildet, die jeweils eine Kammer mit der Flüssigkeit $Fl_1$, eine Kammer mit der Flüssigkeit $Fl_2$ und die Tablette enthalten.

Wie Fig. 1 zu entnehmen ist, sind in den beiden benachbarten und durch die Schweißnaht 30 getrennten Behältern $B_1$, $B_2$ die Kammern mit den unterschiedlichen Flüssigkeiten $Fl_1$ und $Fl_2$ "kreuzweise" angeordnet, d. h. in dem oberen Behälter $B_1$ ist die Kammer 18 gemäß dem Pfeil $P_2$ links und die Kammer 16 gemäß dem Pfeil $P_1$ rechts angeordnet, während indem Behälter $B_2$ unterhalb der Schweißnaht 30 die Kammern 16' und 18' gemäß den Pfeilen $P_1'$ bzw. $P_2'$ links bzw. rechts angeordnet sind. Mit 32 ist eine weitere Schweißnaht bezeichnet.

Zur Durchführung der Prüfung einer Schweißnaht auf Risse oder andere Fehlstellen wird die Trägerfolie vom Taucher unter Wasser derart auf die zu untersuchende Schweißnaht gelegt, daß die Sichtfolie 36 direkt an der Schweißnaht anliegt, also die Trägerfolie 10 von der Schweißnaht abgekehrt ist. Zuvor hat der Taucher die entionisiertes Wasser $Fl_1$ enthaltenden Kammern 16, 16' mechanisch durch Druck zum Platzen gebracht, so daß sich in der Hauptkammer 44 (Fig. 2), die zwischen der Trägerfolie 10 und der Sichtfolie 36 gebildet ist, die Pulver-Tablette im entionisierten Wasser auflöst.

Sodann legt der Taucher in an sich bekannter Weise eine Magnetisierungseinrichtung derart an das zu prüfende Werkstück an, daß ein Magnetfeld sowohl die zu untersuchende Schweißnaht als auch die Suspension der Teilchen aus magnetisierbarem Material (hier: Carbonyleisen) durchsetzt. Die Teilchen aus ordnen sich im Magnetfeld an und bilden bei Fehlstellen charakteristische Strukturen, wie Rillen, Häufungen etc., welche vom Fachmann später analysiert werden können.

Da in der Suspension aus entionisiertem Wasser und der Zinkoxid, weißen Zement und Carbonyleisen enthaltenden Pulvermischung noch keine Viskositätsänderung eintritt, sind die Pulverteilchen frei beweglich und können sich im Magnetfeld sehr schnell, z. B. innerhalb einer Sekunde, ausrichten. Der Taucher unterliegt beim Anbringen der Trägerfolie über der Schweißnaht und beim Positionieren des Magnetisierungsgerätes keinerlei zeitlichen Einschränkungen. Erst wenn diese Arbeiten abgeschlossen sind, öffnet der Taucher durch Druck die Kammern 18, 18', so daß die Flüssigkeit $Fl_1$, also die alkalische Lösung aus Nesosilikaten, in die Suspension eindringt und dort eine Zustandsänderung hervorruft, aufgrund derer die ausgerichteten Teilchen aus magnetisierbarem Material in ihrer für eventuell vorhandene Fehlstellen charakteristischen Lage fixiert werden. das Kunststoffnetz 34 fördert die Fixierung der Teilchen, so daß nach der Zustandsänderung in der Suspension (hier: eine Verkieselung) die Trägerfolie 10 von der untersuchten Schweißnaht abgenommen und an Deck gebracht werden kann, ohne daß die charakteristische Anordnung der Teilchen gestört wird.

Fig. 3 zeigt ein Unterwasserbauwerk 50 mit zwei Teilen, die durch eine Schweißnaht 52 verbunden sind.

Zum Kennzeichnen, Wiederfinden und Identifizieren der Schweißnaht 52 ist ein Ultraschallsender 54 auf dem Unterwasserbauwerk 50 befestigt. Zur Befestigung dient ein bei 56 im Ultraschallsender 54 angeordneter Permanentmagnet, der am Unterwasserbauwerk 50 haftet.

Auf seiner Oberseite weist der Ultraschallsender 54 eine Markierung in Form einer Ziffer 58 auf. Die Ziffer 58 besteht aus fluoreszierendem Material. Auf seiner Oberseite, unterhalb der Ziffer 58 ist der Ultraschallsender 54 mit einem Piezo-Kristall zur Erzeugung von Ultraschallwellen versehen. Weiterhin enthält der Ultraschallsender 54 eine an sich bekannte Steuerschaltung zur Erzeugung der Ultraschallwellen.

Beim Wiederauffinden und Identifizieren der Schweißnaht 52 im Verlaufe eines nachfolgenden Arbeitsganges orientiert sich der Taucher anhand der Ziffer 58 des Ultraschallsenders 54. Überdies führt der Taucher einen Ultraschallempfänger 60 mit sich und positioniert diesen direkt oberhalb der Ziffer 58, d. h. in der Nähe des dort angeordneten Piezo-Kristalls, der die Ultraschallwellen erzeugt. Die vom Ultraschallsender 54 abgegebenen Ultraschallwellen sind entweder mittels ihrer Frequenz oder der Signalfolge codiert und werden vom Ultraschallempfänger 60 aufgenommen und über eine Leitung 62 an Deck des Schiffes übertragen, von dem aus der Taucher betreut wird.

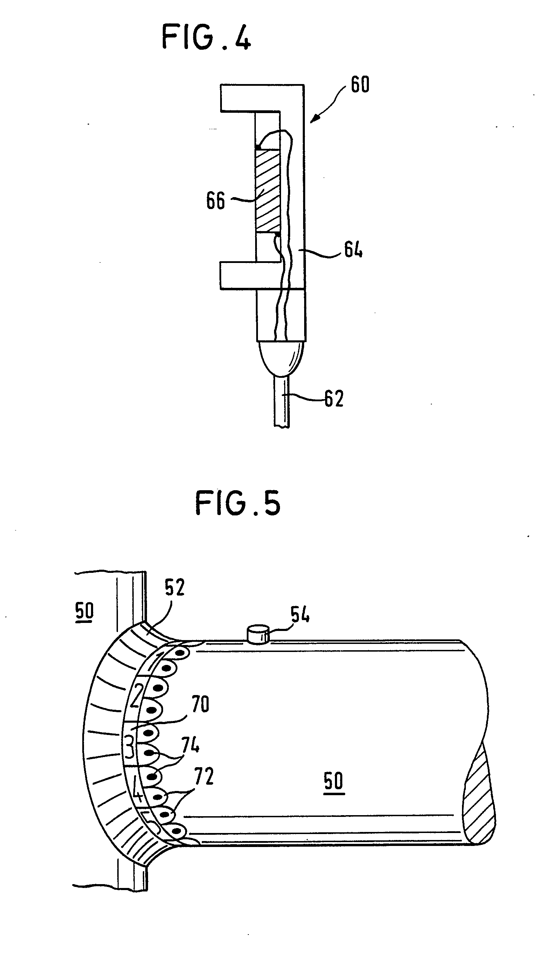

Fig. 4 zeigt den Ultraschallempfänger im Schnitt. In einem Gehäuse 64 ist ein als solches bekanntes Ultraschall-Mikrophon 66 angeordnet, welches mit der Ultraschall-Leitung 62 verbunden ist.

Hat der Taucher die Schweißnaht 52 mittels des Ultraschallsenders 54 sowie der Ziffer 58 erkannt, so kann er mit der Prüfung der Schweißnaht 52 auf Fehlstellen beginnen.

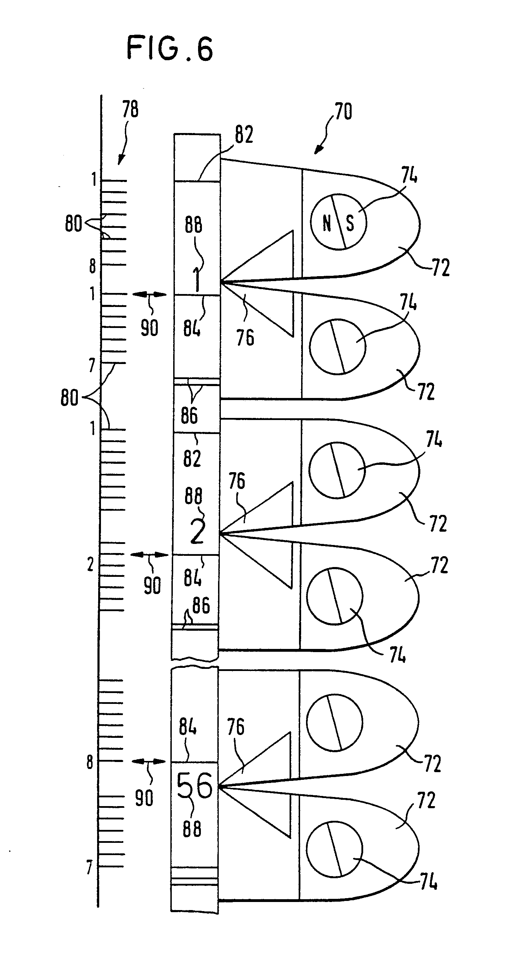

Hierzu wird gemäß Fig. 5 ein Band 70 neben die Schweißnaht 52 auf das Unterwasserbauwerk 50 aufgelegt und dort befestigt. Zur Befestigung dienen Permanentmagnete 74, die in Taschen 72 des Bandes angeordnet sind, siehe auch Fig. 6.

Es soll nun die Schweißnaht 52 auf Fehlstellen mittels Einrichtungen untersucht werden, wie sie aus der genannten DE-PS 31 45 090 und den deutschen Patentanmeldungen P 37 22 569 und P 37 22 596 bekannt sind und oben anhand der Fig. 1 und 2 beschrieben wurden.

Gemäß Fig. 6 ist das Band 70 mit leuchtenden oder reflektierenden Pfeilen 76 versehen. Das Band 70 weist einzelne Abschnitte auf, die jeweils einem Behälter $B_1$ bzw. $B_2$ entsprechen.

Auf der den Taschen 72 gegenüberliegenden Seite des Bandes 70 ist eine Codierung 78 in Form einzelner Elemente 80 vorgesehen. Die Elemente 80 bestehen aus kurzen Drahtstücken hochpermeablen Materials, das eine sehr geringe magnetische Remanenz aufweist. beim Magnetisieren (wie oben anhand der Fig. 1 und 2 beschrieben) bilden sich daher an den Enden der Elemente 80 magnetische Pole, durch die die Teilchen aus magnetisierbarem Material angezogen werden. Somit entstehen an den Enden der Elemente 80 in den Behältern klar erkennbare Structuren, die nach Durchführung der Messung, ebenso wie die für eventuelle Fehlstellen charakteristischen Teilchen-Structuren, beim Aushärten fixiert werden und später auslesbar sind.

Das Band 70 ist so eingeteilt, daß die einzelnen Behälter mit den magnetisierbaren Teilchen die Schweißnaht 52 lückenlos abdecken. Es kann auch eine geringe Überlappung der einzelnen Behälter vorgesehen sein.

Jeder Behälter wird mit einer Mittelnaht (z. B. der Schweißnaht 30 gemäß Fig. 1) derart auf die Schweißnaht 52 gelegt, daß die Mittelnaht genau auf der Spitze eines der Pfeile 76 zu liegen kommt. Im Band 70 sind gemäß Fig. 6 einzelne Drahtstücke 82 und 84 angeordnet, und zwar so, daß bei jedem Behälter ein erstes Drahtstück 82 am Anfang (von oben gesehen) liegt und mit der "1" der Codierung 78 zusammenfällt. Das jeweils untere Drahtstück 84 ist in Bezug auf das obere Drahtstück 82 derart versetzt, daß beim ersten Behälter das untere Drahtstück 84 mit der "1" der Codierung zusammenfällt, während beim anschließenden Behälter "2" (siehe die Markierung 88) der untere Drahtstab 84 mit der "2" der Codierung 78 zusammenfällt. Die Zuordnung zwischen den Drahtstäben 84 und der Codierung 78 ist durch Pfeile 90 in Fig. 6 angedeutet. Durch Doppel-Drahtstücke 86 ist jeweils das Ende eines Behälters markiert. Da die Codierung 78 und die Drahtstäbe 82, 84 und 86 in den Behältern eine eindeutige Strukturänderung erzeugen, ist mit ihnen eine vollständige Ortsbestimmung der einzelnen Behälter in bezug auf ihre Reihenfolge und die Schweißnaht 52 möglich.

## Ansprüche

1. Vorrichtung zum Kennzeichnen und Auffinden einzelner Stellen eines Unterwasserbauwerkes (50), wie zu überprüfender Schweißnähte (52) einer Unterwasser-Pipeline oder dergleichen, **gekennzeichnet** durch

mehrere, an den zu kennzeichnenden und aufzufindenden Stellen des Unterwasserbauwerks befestigbare Ultraschallsender (54), die mit einem leuchtenden oder Licht reflektiernden Zeichen (58) versehen sind,

und zumindest einen Ultraschallempfänger (60) der nahe einem der Ultraschallsender positionierbar und mit einer Leitung (62) verbunden ist, über die ein vom Ultraschallsender ausgesandtes Signal übertragbar ist.

2. Vorrichtung nach Anspruch 1,
dadurch **gekennzeichnet,**
daß die Ultraschallsender (54) jeweils einen Permanentmagneten aufweisen.

3. Vorrichtung nach einem der Ansprüche 1 oder 2,
dadurch **gekennzeichnet,**
daß die Ultraschallsender(54) jeweils eine unterschiedliche Frequenz aufweisen oder das von Ihnen abgegebene Signal jeweils unterschiedliche codiert ist.

4. Vorrichtung zum Bestimmen und Markieren der Stellung einer Vielzahl von Behältern in Bezug auf eine Schweißnaht unter Wasser, wobei in den Behältern Teilchen aus magnetisierbarem Material in einer Flüssigkeit suspendierbar sind, die sich in einem eine zu überprüfende Schweißnaht und die Suspension durchsetzenden Magnetfeld bei Fehlstellen in charakteristischer Weise anordnen,
**gekennzeichnet** durch
ein Band (70), das entlang der Schweißnaht (52) befestigbar ist und in Richtung seiner Längserstreckung codiert angeordnete Elemente (80) aus einem Material mit magnetischer Permeabilität aufweist.

5. Vorrichtung nach Anspruch 4,
dadurch **gekennzeichnet,**
daß das Band (70) mit leuchtenden oder Licht reflektierenden Markierungen (88) versehen ist, in Bezug auf welche die Behälter ($B_1$, $B_2$) positionierbar sind.

6. Vorrichtung nach einem der Ansprüche 4 oder 5, dadurch **gekennzeichnet,**
daß die codiert angeordneten Elemente (80) aus Drahtstücken bestehen.

7. Vorrichtung nach einem der Ansprüche 4 bis 6, dadurch **gekennzeichnet,** daß das Band (70) eine Mehrzahl von Permanentmagneten (74) aufweist, mit denen es entlang der Schweißnaht (52) befestigbar ist.

MAGFOIL AG
EP-62 848

# FIG.1

# FIG.2

# FIG.3

# FIG.4

60

66

64

62

# FIG.5

50

52

54

70

74

72

50

# FIG.6